(19) Europäisches Patentamt

European Patent Office

Office européen des brevets

(11) **EP 0 986 260 A2**

(12) **EUROPEAN PATENT APPLICATION**

(43) Date of publication:
**15.03.2000 Bulletin 2000/11**

(51) Int. Cl.[7]: **H04N 7/26**

(21) Application number: **99202778.9**

(22) Date of filing: **30.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **03.09.1998 GB 9819099**

(71) Applicant: **NDS LIMITED**
**West Drayton, Middlesex UB7 ODQ (GB)**

(72) Inventor: **Baudouin, Charles**
**Eastleigh, Hampshire SO50 4ND (GB)**

(74) Representative:
**Anderson, Angela Mary**
**NDS Limited,**
**Gamma House,**
**Enterprise Road**
**Chilworth, Hampshire SO16 7NS (GB)**

(54) **Video signal encoding**

(57)     The present invention relates to the encoding of video signals comprising input digital words to produce a compression encoded output signal.

In a television studio environment, it is conventional to generate digital television signals in which the picture information is conveyed by a digital signal consisting of digital words which are 10 bits in length. MPEG standards which apply to the transmission and reception of digital television signals require conformance to a word length of 8 bits. As a result, it is necessary to truncate the 10 bit digital words to 8 bits before compression encoding the signal in a standard encoder ready for transmission to a receiver.

In the invention, the input digital words are truncated and compression encoded to produce an output compression encoded signal and the output compression encoded signal is then decoded so as to reconstruct the truncated words. A helper signal is then generated as a function of the difference between the input digital words and the reconstructed words. A receiver may be provided with the facility both to receive and decode the compression encoded signal and to combine the resulting decoded signal with the helper signal so as to improve the signal to noise performance of the transmission.

Fig.1.
4:2:2 10-BIT ENCODER

**EP 0 986 260 A2**

## Description

The present invention relates to the encoding of video signals comprising input digital words to produce a compression encoded output signal.

In a television studio environment it is conventional to generate digital television signals in which the picture information is conveyed by a digital signal consisting of digital words which are 10 bits in length. The well known MPEG standards which apply to the transmission and reception of digital television signals require conformance to a word length of 8 bits. As a result, it is necessary to truncate the 10 bit digital words to 8 bits before compression encoding the signal in a standard encoder ready for transmission to a receiver.

At high bit rates, typically in excess of 30 Mbits per second, increases in the bit rate of the transmitted signal fail to provide any improvement in the signal to noise ratio of an MPEG signal transmission for about 80% of the picture material. For a quantisation parameter (QP) of 1 or 2, a definite upper limit is reached in the performance of the MPEG transmission.

It is an aim of the present invention to provide for encoding a digital video signal so that it may be transmitted with an improved signal to noise ratio, and provide performance extending to 10 bit accuracy.

According to the present invention, there is now provided a method of encoding an input digital video signal comprising input digital words, the method comprising the steps of; truncating the input digital words, compression encoding the truncated words to produce an output compression encoded signal, decoding the output compression encoded signal so as to reconstruct the truncated words, and generating a helper signal as a function of the difference between the input digital words and the reconstructed digital words.

Further according to the present invention, there is provided video signal encoding apparatus to encode an input digital video signal comprising input digital words, the apparatus comprising; a truncator to truncate the input digital words, an encoder to encode the truncated words to produce an output compression encoded signal, a decoder to decode the output compression encoded signal so as to reconstruct the truncated digital words, and a helper signal generator to generate a helper signal as a function of the difference between the input digital words and the reconstructed digital words.

Where the output compression encoded signal has been encoded so that it can be transmitted as a standard MPEG transmission, the transmission may be received by a standard MPEG receiver. Alternatively, the receiver may be provided with the facility both to receive and decode the compression encoded signal and to combine the resulting decoded signal with the helper signal so as to improve the signal to noise performance of the transmission.

The invention will now be further described, by way of example, with reference to the accompanying drawings in which;

Figure 1 shows a block circuit diagram of an encoder apparatus according to the present invention, and

Figure 2 shows a block circuit diagram of a receiver apparatus to receive a signal encoded by the apparatus of Figure 1.

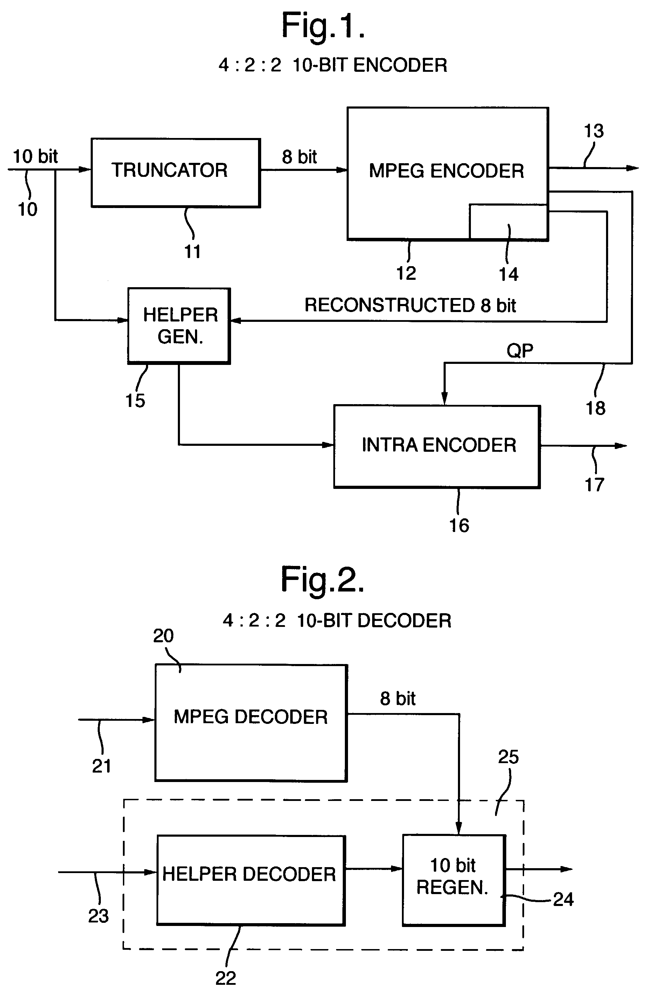

In Figure 1, an encoder has an input terminal 10 to receive an input digital video signal which comprises digital words each of which is of 10 bits. The input digital signal is a television signal which has been sampled according to the well known 4:2:2 sampling process although it will be understood that the invention can be applied to the encoding of input television signals which have been sampled according to other formats such as the 4:2:0 sampling format.

A truncator 11 receives the 10-bit digital words of the input signal and truncates them to a length of 8 bits. The truncation may be performed by simply removing the 2 least significant digits from each input word. Alternatively the 8-bit word may be formed by rounding the 10-bit word to the nearest 8-bit integer by adding 2 and removing the two least significant bits.

Following truncation, each of the truncated words is passed to a standard MPEG II encoder 12 which applies compression encoding to the truncated words so as to produce an MPEG output signal for onward transmission from an output terminal 13 through a main transmission channel and subsequent reception by a receiver. The MPEG encoder incorporates a decoder 14 which decodes the MPEG output signal so as to reconstruct the 8 bit digital words at the input to the encoder 12. The stream of reconstructed words will not be identical to the stream of truncated words supplied by the truncator 11 because of distortions introduced by the processes of compression encoding and subsequent decoding. The reconstructed words will however be representative of the words recovered by the decoder in a receiver of the MPEG transmission sent from the output terminal 13.

The reconstructed 8 bit words are applied as one input to a helper signal generator 15. The 10 bit words of the input digital signal at the terminal 10 are supplied as another input to the generator 15. The generator 15 generates a helper signal at its output terminal 16 which is a function of the difference between the 10 bit words at the input terminal 10 and the 8 bit words reconstructed by the decoder 14. For each pixel of the picture information represented by the input television signal, the helper signal has a word of value H according to the relation in the straight truncation case of the main signal:

$$H = (2*ref - 8*rec + 128 - 3) \qquad (1)$$

ref is the value of a 10 bit word in the input television signal and rec is the value of the corresponding 8 bit reconstructed word from the decoder 14.

The value of the signal H is clipped in the generator 15 to a range between the values of 128 - 31 and 128 + 31. The helper signal is then passed to an intra coder 16 where the helper signal is intra encoded and passed to an output terminal 17 for transmission through a helper channel as a high band helper bitstream.

The MPEG encoder 12 controls the bit rate of the MPEG transmission by quantisation according to a variable quantisation parameter as is well known in the art. For a quantisation parameter exceeding 3, the resolution obtainable is less than 8 bits. According to the present invention, it is recognised that the bandwidth used by the helper signal causes a loss in signal to noise performance of the main channel when the quantisation parameter exceeds 3.

The MPEG encoder 12 has a main rate buffer and the helper channel encoder 16 contains a helper channel rate buffer. Bit rate capacity is shared between the main and helper rate buffers with a percentage bit rate allocation dependent on the quantisation parameter QP. A control is exercised by way of a control link 18 to progressively reduce the bandwidth allocated to the helper channel as the value of the quantisation parameter QP increases. At a value of QP exceeding 3, the helper signal is absent, or contains no information, and the encoder of Figure 1 operates as a conventional MPEG encoder under these conditions. As the QP reduces in value from 3, the bandwidth of the helper channel increases to a maximum of about 25% of the total bit-stream bandwidth. This provides the extra resolution. The encoder 16 is an intra only encoder and may be either an MPEG based encoder or may perform an encoding operation based on another standard. The encoder 16 may operate to encrypt the helper signal so as to prevent unauthorised access to the helper channel.

In the relation (1) above which defines the value of the signal H, the gain of two with respect to the reference value, ref, allows full transparency in the helper channel, while still retaining an intra quantisation matrix which allows for more precision in the low frequency components when the helper signal is bit rate limited.

In Figure 2, a decoder apparatus is provided to receive the transmissions in the main and helper channels from the encoder of Figure 1. The decoder apparatus includes an MPEG decoder 20 to receive the main MPEG channel transmission at an input terminal 21. The output from the decoder 20 is a decoded bitstream of 8 bit words. A helper decoder 22 receives the helper transmission in the helper channel through an input terminal 23. The decoder 22 decodes the helper signal transmission to reproduce the helper signal which was generated by the generator 15 at the encoder. A regenerator 24 combines the 8 bit words from the MPEG decoder 20 with the words of the helper signal so as to reconstruct the 10 bit words originally supplied to the input terminal 10 of the encoder of Figure 1. The helper decoder 22 and regenerator 24 may be provided on an option card 25 to be fitted to a standard MPEG receiver.

## Claims

1. A method of encoding an input digital video signal comprising input digital words, the method comprising the steps of;

   truncating the input digital words;
   compression encoding the truncated words to produce an output compression encoded signal;
   decoding the output compression encoded signal so as to reconstruct the truncated words; and,
   generating a helper signal as a function of the difference between the input digital words and the reconstructed words.

2. A method as claimed in claim 1, wherein the step of compression encoding the truncated words includes quantisation according to a variable quantisation parameter, the method including the further step of sharing bit rate between the output compression encoded signal and the helper signal in a ratio dependent upon the quantisation parameter.

3. A method as claimed in claim 2, wherein the step of sharing bit rate between the output compression encoded signal and the helper signal provides an increase in share of bit rate to the helper signal upon a decrease in the quantisation parameter.

4. A method as claimed in claim 3, wherein the step of sharing bit rate between the output compression encoded signal and the helper signal provides for the share allocated to the helper signal to decrease to zero upon an increase of the quantisation parameter to a preset limit.

5. A method as claimed in any one of the preceding claims, which is applied to encoding an input digital video signal which comprises words of 10 bits in length and the step of truncating the input digital words produces truncated words of 8 bits in length.

6. A method as claimed in any one of the preceding claims, wherein the step of generating a helper signal as a function of the difference between the input digital words and the reconstructed digital words produces a value H for each pixel where:

$$H = (2*ref - 8*rec + 128 - 3)$$

ref is the value of a word in the input digital video signal and rec is the value of the corresponding reconstructed word.

7. Video signal encoding apparatus to encode an input digital video signal comprising input digital words, the apparatus comprising;

a truncator to truncate the input digital words; an encoder to encode the truncated words to produce an output compression encoded signal; a decoder to decode the output compression encoded signal so as to reconstruct the truncated digital words; and, a helper signal generator to generate a helper signal as a function of the difference between the input digital words and the reconstructed digital words.

8. Video signal encoding apparatus as claimed in claim 7, wherein the encoder is adapted to encode the truncated words according to a variable quantisation parameter, rate buffers being provided to share bit rate between the output compression encoded signal and the helper signal in a ratio dependent upon the quantisation parameter.

9. Video signal encoding apparatus as claimed in claim 8, wherein the rate buffers share bit rate between the output compression encoded signal and the helper signal by providing an increase in the share allocated to the helper signal upon a decrease in the quantisation parameter.

10. Video signal encoding apparatus as claimed in claim 9, wherein the rate buffers provide a share of bit rate to the helper signal which decreases to zero upon an increase of the quantisation parameter to a preset limit.

11. Video signal encoding apparatus as claimed in any one of claims 7 to 10, which is adapted to encode an input digital video signal which comprises words of 10 bits in length and the truncator is adapted to truncate the input digital words to produce truncated words of 8 bits in length.

12. Video signal encoding apparatus as claimed in any one of claims 7 to 11, wherein the helper signal generator is adapted to generate a helper signal which has a value H for each pixel where:

$$H = (2*ref - 8*rec + 128 - 3)$$

ref is the value of a word in the input digital video signal and rec is the value of the corresponding reconstructed word.

# Fig.1.

## 4 : 2 : 2  10-BIT ENCODER

10 bit → TRUNCATOR — 11

8 bit → MPEG ENCODER — 12

13

14

RECONSTRUCTED 8 bit

HELPER GEN. — 15

QP

18

INTRA ENCODER — 16

17

# Fig.2.

## 4 : 2 : 2  10-BIT DECODER

20

MPEG DECODER

8 bit

21

25

23

HELPER DECODER

10 bit REGEN.

24

22